# EUROPEAN PATENT APPLICATION

(11) **EP 3 211 875 A1**
(43) Date of publication of application: **30.08.2017**
(21) Application number: 17156317.4
(22) Date of filing: 15.02.2017
(51) Int. Cl.: H04N 1/405

(54) **METHOD OF PRINTING**

(30) Priority: 25.02.2016 EP 16157256
(71) Applicant: OCE Holding B.V., 5914 CA Venlo (NL)
(72) Inventor: FEZZANI, Riadh, 5914 CA Venlo (NL); COLLOMP, Jérome, 5914 CA Venlo (NL); MARCIANO, Luc, 5914 CA Venlo (NL)
(74) Representative: OCE IP Department

(57) **Abstract**

The present invention relates to a printing method comprising the steps of: providing a digital image comprising a raster of a plurality of pixels, the digital image comprising color information for each pixel; providing a height channel to the digital image defining a height for each pixel, the height having a minimum value; providing an inking mask comprising a binary image of areas to be printed and areas not to be printed; image processing of the digital image by applying the inking mask to the image, wherein the height of a pixel within an area not to be printed is reduced to zero and wherein the height of a pixel within an area to be printed is left unchanged; printing the obtained processed image. The present invention further relates to a printed object manufactured using a method according to the present invention and to a printer comprising a controller configured for performing a method according to the present invention.

## Description

### FIELD OF THE INVENTION

The present invention relates to a method of printing for producing objects by additive manufacturing.

### BACKGROUND ART

Additive manufacturing techniques using ink-jet technology are known in the art, for example from US patent publication US2015/144014, wherein a method for generating relief prints is disclosed.

The known methods relate to single object manufacturing. If one desires to separate the printed object into multiple parts, the printed object needs to be cut. A disadvantage of cutting is that there is a significant risk of damaging the printed object. This is an even more pronounced disadvantage when the printed object needs to be cut into complementary parts, like jigsaw puzzle pieces.

It is therefore an object of the present invention to overcome or at least mitigate said disadvantage and provide a method of printing for directly manufacturing the intended multiple parts without the need of a cutting step, thus eliminating the risk of damaging the printed object due to cutting.

### SUMMARY OF THE INVENTION

This object can be obtained with a printing method comprising the steps of:
a) providing a digital image comprising a raster of a plurality of pixels, the digital image comprising color information for each pixel;
b) providing a height channel to the digital image defining a height for each pixel, the height having a minimum value;
c) providing an inking mask comprising a binary image of areas to be printed and areas not to be printed;
d) image processing of the digital image by applying the inking mask to the image wherein the height of a pixel within an area not to be printed is reduced to zero and wherein the height of a pixel within an area to be printed is left unchanged;
e) printing the processed image obtained in step d.

In the context of the present invention, reducing the height of a pixel to zero is also expressed as canceling the height information, meaning that height information of pixels located in the areas not to be printed is reset (e.g. to 0) such that an object printed with a method in accordance with the present invention obtains a zero thickness in the areas not to be printed. Optionally the color information for pixels located in areas not to be printed may also be canceled in step c.

In an embodiment, the inking mask comprises separating lines as areas not to be printed and defining an object or multiple (sub-)objects, such that the (sub-)objects are disjoint from its/their surroundings or from each other directly after step d.
Therefore, a method according to the present invention does not require a gluing and drying step and no additional, possibly damaging, cutting step.
It is further advantageous that with the method according to the present invention there is full control with respect to the applied inking mask, e.g. the number of disjoint objects and the size thereof and the width of the separating lines can be completely controlled dependent on the desired application, by defining the inking mask.

In an embodiment, the digital image comprises a plurality of sub-images and the inking mask comprises separating areas as areas not to be printed, such that the sub-images are printed as disjoint objects, wherein the method comprises an optimizing step to reduce the separating areas to a minimum. In a method according to the present embodiment, the occupied printing surface of a printer can be minimized, and hence the printing process of a plurality of disjoint objects becomes more efficient (than printing them separately).

In an embodiment, a substrate is provided onto which the processed image obtained in step c is printed, wherein the substrate is optionally removed after printing the processed image.

In the method according to the present invention a printing technique that is suitable for additive manufacturing and/or capable of forming an image (picture) can be used. An example of such a printing technique is ink jetting a radiation curable, e.g. UV-curable, ink composition. In such printing technique (known in the art) a layer of liquid ink is applied to the surface of a substrate (which may also be a previously formed ink layer), by expelling an ink droplet from an ink jet imaging device. After impact on the surface of said substrate, the liquid ink is radiated (e.g. with UV-radiation form a UV-lamp or UV-LED) to start a polymerization reaction of the reactive components in the ink composition to cure the ink.

In an embodiment, the digital image comprises a 2D image not containing height information for the pixels (step a), wherein in the image processing step (step d) comprises appending height information to the raster of pixels located in the areas to be printed, preferably in accordance with the desired thickness of the printed image.

In an embodiment, the digital image comprises a 3D (relief) image containing height information of the pixels (step a), wherein the digital image comprises a 3D (relief) image containing height information of the pixels (step a), wherein in the image processing step (step d) the height information of the pixels is compared to a threshold height for obtaining a desired object thickness and wherein the height information of the pixels located in the areas to be printed is optionally adapted to obtain said desired object thickness.

For example, if the digital 3D relief image comprises a relatively large area having low height values, the strength of the printed object may not be sufficient, because of (at least locally) too small object thickness. In such cases new height data may be calculated, e.g. by adding a constant height value across the entire surface of the object, or as an image wise correction calculated with a more sophisticated algorithm (not part of the present invention and therefore not further discussed here).

The relationship between height information (e.g. number of ink layers to be printed) and object thickness may be stored in the printer, e.g. as a look-up table.

In an embodiment, at least one effect offered by relief printing selected from the group consisting of non-flat relief printing, lenticular effect, double sided printing (ink only image, i.e. an image or object completely formed of ink), and transparency (i.e. using transparent ink) is applied to a digital image printed with a method according to the present invention.

In an embodiment the inking mask is adapted for smoothening the edges of the multiple (sub-)objects as defined by the separating lines in the inking mask, wherein the inking mask comprises more than two (binary) inking levels, e.g. the inking mask comprises zones adjacent to the separating lines (relative height = 0) with a gradually increasing relative height (from 0 to 1) towards the areas to be printed (relative height =1). The relative height may also be termed height factor and may be multiplied with the height data of the corresponding pixels of the digital image in order to obtain the absolute height data for the processed digital image. Because the inking mask of the present embodiment does not comprise sharp transitions from printing to non-printing areas, the edges of the printed areas may be smoothed and hence less vulnerable.

In another aspect, the present invention relates to a printed object, obtained with a method according to the present invention.

In an embodiment, the printed object is an ink only object.
By using e.g. UV-curable ink compositions, an object may be formed made of polymeric material (plastic-like material) that is formed by polymerization reaction of the reactive monomers present in the UV-curable ink composition. A substrate is needed to support the printed matter (at least the first layer). After finalizing the print job, the substrate may be removed to obtain an ink only printed object, in the context of the present invention meaning that the object is completely formed of cured ink and that a substrate (and/or other supporting structures) is absent in the final product.
Suitable substrates may be substrates having good release properties with respect to the used (and cured) ink, in most cases substrates with low surface energy. A substrate may also be provided with a release layer or with a sacrificial layer that can be removed together with and/or from the printed object.
Additional advantages of ink only objects according to the present embodiment are that the objects are water-proof and that delaminating will not occur.

In an embodiment, the printed object comprises a substrate. In order to separate the multiple parts making up the printed object that is printed with a method according to the present invention, only the substrate needs to be cut along the separation lines. The risk of damaging the printed image is still significantly reduced because the printed image does not need to be cut.

In an embodiment, the printed object is a jigsaw puzzle.

With the method according to the present invention, the size, the number of pieces and the separation space between the pieces of the jigsaw puzzle are easily customizable.

In yet another aspect the present invention relates to a printer comprising a controller configured for performing a method according to the present invention.

In an embodiment, the controller comprises an algorithm to generate an inking mask comprising a binary image of areas to be printed and areas not to be printed. The inking mask preferably comprises separation guidelines as areas not to be printed.

In an embodiment, the controller comprises a user interface for entering input data based on which the algorithm generates the inking mask.

In a further embodiment, the input data comprise the thickness of the object to be printed, the number of sub-objects, the sizes of the object and/or sub-objects and the minimum width of the separation areas.

### BRIEF DESCRIPTION OF THE DRAWINGS

The present invention will become more fully understood from the detailed description given herein below and accompanying schematical drawings which are given by way of illustration only and are not limitative of the invention, and wherein:
Fig. 1 shows a schematic representation of A) a classical method of jigsaw puzzle manufacturing; and B) a method according to the present invention.
Fig. 2 shows a photograph of a jigsaw blade used in a mechanical press machine in a cutting step of a classical method of jigsaw puzzle manufacturing.
Fig. 3 schematically shows an image processing method according to the present inventions.
Fig. 4 schematically shows two examples of an inking mask used in image processing according to the present inventions.
Fig. 5 shows a printed jigsaw puzzle according to an aspect of the present invention.

### DETAILED DESCRIPTION

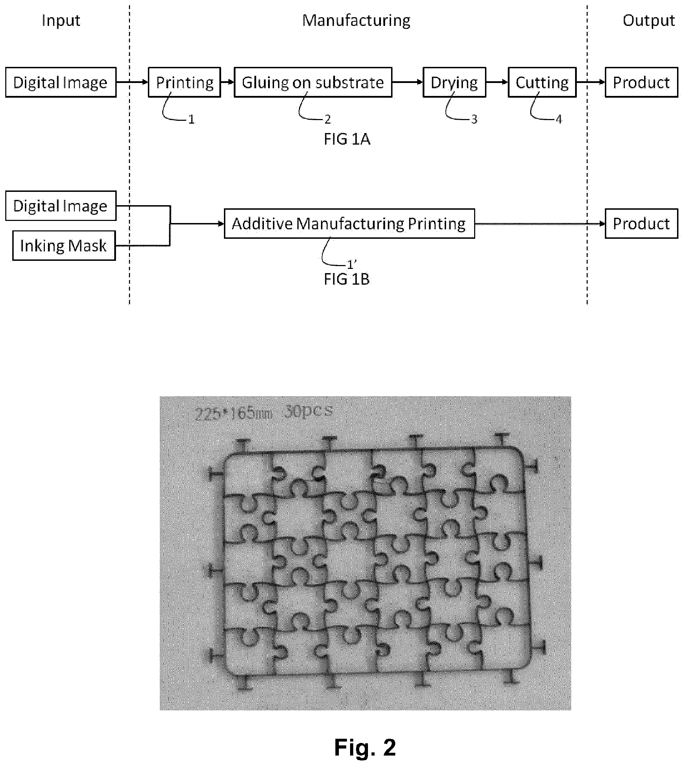

Fig. 1 shows schemes of A) a classical method of jigsaw puzzle manufacturing; and B) a method according to the present invention.

The method steps of the classical manufacturing method are:
1. Printing step, for example printing an image on standard paper or on thick media such as cardboard;
2. Workpiece assembly: this is an optional step that may be performed if the image is printed on a light weight print substrate. The print is the glued (step 2 in Fig. 1A) on a thick(er) substrate;
3. Optional drying step: if a print is glued on a thicker substrate (step 2), a drying step 3 is required;
4. Cutting: e.g. using a mechanical press machine.

The photograph in Fig. 2 shows an example of a jigsaw blade used in a mechanical press machine in the cutting step (step 4).

This method according to the prior art has the following disadvantages:
- If step 2 involves a gluing step, a drying step is required, because cutting wet workpiece assemblies inherently increases the risk of imparting damage to the printed image. Sufficient drying may require up to several days;
- In an industrial context, jigsaw puzzle sizes and number of pieces are standardized. Cutting press machines offer limited number of personalization options.

It can be seen that the manufacturing method shown in Fig. 1B comprises only one manufacturing step, which is an additive manufacturing printing step (step 1').

The present invention consists in using an additive manufacturing printer (flat bed printer, 3D printer) for printing objects, in the present example a jigsaw puzzle. Basically the invention lies in the fact that in the additive manufacturing technique the image is processed such that the 'cutting guidelines' (as used in a classical manufacturing method), defining the borders of the multiple parts of the jigsaw puzzle are actually followed by *not* printing them, i.e. the color (2D, 3D) and height (3D) images are blank and zero respectively on the cutting guidelines. In this way, during printing the image, empty lines are formed in the printed matter at the positions of the 'cutting guidelines'. Such empty lines can serve as separation lines along which the multiple parts of the printed matter (e.g. pieces of the jigsaw puzzle) can be easily and manually separated. In most cases the multiple parts of the printed matter are disjoint at the end of the printing process. In case thick objects are printed some separation may be required because due to spreading of the ink prior to curing the ink, the separation line may be slightly filled with ink, hence forming a thin bridging part between adjacent parts.

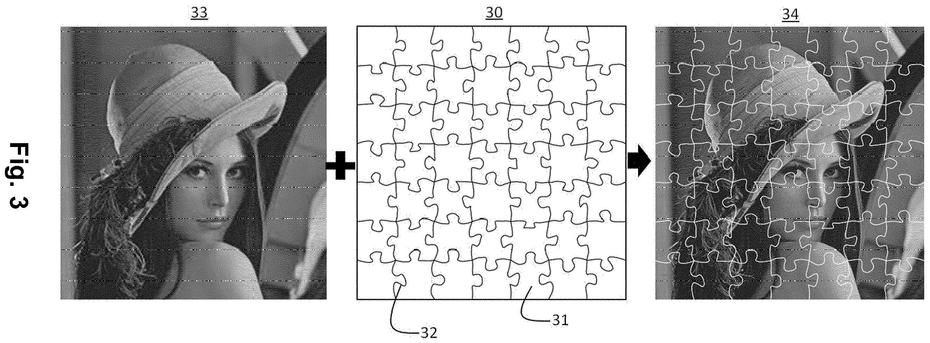

A jigsaw puzzle pattern (separation guidelines) can be provided as a so called 'inking mask', which basically is a binary mask indicating areas to be printed (white) and areas not to be printed (black), see 31 and 32 in Fig. 3 respectively. The inking mask 30 can be (digitally) applied to the image to be printed 33, to obtain a processed digital image 34. In case of a jigsaw puzzle pattern, the separation guidelines are indicated as areas not to be printed (black). If required the width of the separation guidelines may be adapted in the inking mask, dependent on the thickness of the matter to be printed.

Therefore, in case of relief printing a jigsaw puzzle, the separation guidelines are no longer used for defining the cutting shape of the cutting press machine, but are used to process the image to be printed such that material deposition can be controlled in such a way that separation of the jigsaw puzzle pieces is obtained automatically during manufacturing, without the necessity of a separate, possibly damaging, cutting step.

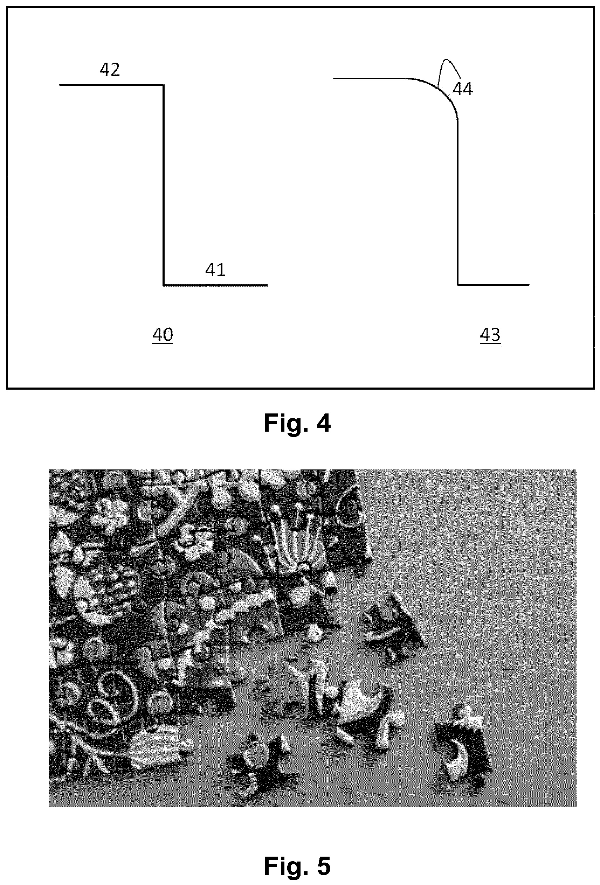

Fig. 4 shows a two dimensional graphical representation of inking masks. A standard binary inking mask 40 is shown only consisting of height factors 0 (no ink, 41) and 1 (42, ink according to digital image), the inking mask therefore consisting of step functions at the boundaries of the (sub-)objects. Further an inking mask adapted for smoothening the edges of the (sub-)objects 43 is shown. This inking mask comprises a gradually increasing height factor 44 from non-printed areas towards printed areas.

Fig. 5 shows a photograph of a jigsaw puzzle printed with an Océ Arizona printer.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination and any advantageous combination of such claims is herewith disclosed.

Further, the terms and phrases used herein are not intended to be limiting; but rather, to provide an understandable description of the invention. The terms "a" or "an", as used herein, are defined as one or more than one.

The invention being thus described, it will be obvious that the same may be varied in many ways. Such variations are not to be regarded as a departure from the scope of the invention, and all such modifications as would be obvious to one skilled in the art are intended to be included within the scope of the following claims.

## Claims

1. A printing method comprising the steps of:
a) providing a digital image comprising a raster of a plurality of pixels, the digital image comprising color information for each pixel;
b) providing a height channel to the digital image defining a height for each pixel, the height having a minimum value;
c) providing an inking mask comprising a binary image of areas to be printed and areas not to be printed;
d) image processing of the digital image by applying the inking mask to the image, wherein the height of a pixel within an area not to be printed is reduced to zero and wherein the height of a pixel within an area to be printed is left unchanged;
e) printing the processed image obtained in step d.

2. The printing method according to claim 1, wherein the inking mask comprises separating lines as areas not to be printed and defining an object such that the object is disjoint from its surroundings directly after step d.

3. The printing method according to any one of the preceding claims, wherein, the digital image comprises a plurality of sub-images and the inking mask comprises separating areas as areas not to be printed, such that the sub-images are printed as disjoint objects, wherein the method comprises an optimizing step to reduce the separating areas to a minimum.

4. The printing method according to any one of the preceding claims, wherein a substrate is provided onto which the processed image obtained in step c is printed.

5. The printing method according to claim 4, wherein the substrate is removed after printing the processed image.

6. The method according to any one of the preceding claims, wherein at least one effect offered by relief printing selected from the group consisting of non-flat relief printing, lenticular effect, double sided printing (ink only image), and transparency (i.e. using transparent ink) is applied to a digital image printed with a method according to the present invention.

7. The method according to any one of the preceding claims, wherein the inking mask is adapted for smoothening an edge of an object as defined by the separating lines in the inking mask, wherein the inking mask comprises zones adjacent to the separating lines (relative height = 0) with a gradually increasing relative height (from 0 to 1) towards the areas to be printed (relative height =1).

8. A printed object obtained with a method according to any one of the preceding claims.

9. The printed object according to claim 8, wherein the printed object is an ink only object.

10. The printed object according to claim 8, wherein the printed object comprises a substrate.

11. The printed object according to any one of claims 8-10, wherein the printed object is a jigsaw puzzle.

12. A printer comprising a controller configured for performing a method according to any one of claims 1-7.

13. The printer according to claim 12, wherein the controller comprises an algorithm to generate an inking mask comprising a binary image of areas to be printed and areas not to be printed.
